(19) **Europäisches Patentamt**

**European Patent Office**

**Office européen des brevets**

(11) **EP 1 116 886 B1**

(12) **EUROPÄISCHE PATENTSCHRIFT**

| | |
|---|---|
| (45) Veröffentlichungstag und Bekanntmachung des Hinweises auf die Patenterteilung:<br>**22.02.2006 Patentblatt 2006/08** | (51) Int Cl.:<br>***F04D 29/16*** *(2006.01)*    ***F16J 15/44*** *(2006.01)* |

(21) Anmeldenummer: **00811179.1**

(22) Anmeldetag: **12.12.2000**

(54) **Strömungsmaschine für ein Fluid mit einem radialen Dichtspalt zwischen Statorteilen und einem Rotor**

Rotary machine for a fluid with a radial seal clearance between stator parts and a rotor

Machine rotative pour fluide à jeu d'étanchéité radial entre les parties du stator et un rotor

(84) Benannte Vertragsstaaten:
**DE FR GB**

(30) Priorität: **11.01.2000 EP 00810024**

(43) Veröffentlichungstag der Anmeldung:
**18.07.2001 Patentblatt 2001/29**

(73) Patentinhaber: **SULZER PUMPEN AG**
**8401 Winterthur (CH)**

(72) Erfinder:
• **Pesek, Tomas**
**8404 Winterthur (CH)**

• **Bolliger, Walter**
**6340 Baar (CH)**

(74) Vertreter: **Sulzer Management AG**
**KS/Patente/0007**
**Zürcherstrasse 12**
**8401 Winterthur (CH)**

(56) Entgegenhaltungen:
**US-A- 4 867 638        US-A- 4 948 336**

**Beschreibung**

Die Erfindung handelt von einer Strömungsmaschine für ein Fluid mit einem radialen Dichtspalt zwischen Statorteilen und einem Rotor, wobei am Dichtspalt ein selbsttragender Verschleissring vorgesehen ist, dessen äussere Mantelfläche mit einer Verschleissfläche versehen ist und der in der Richtung der Rotationsachse des Rotors axial fixiert ist. Eine solche Strömungsmaschine ist Z.B. aus der US-A-4867638 bekannt.

In Strömungsmaschinen treten zwischen den rotierenden Teilen und den Statorteilen häufig axial durchströmte radiale Dichtspalte auf, die klein gehalten sein sollten, um Verlustströme klein zu halten. Viele Fluide sind mit Feststoffteilen beladen, die in solchen engen Dichtspalten zu abrasivem Verschleiss führen können. Dies ist einerseits bedingt durch die Rotation des Rotors und zum anderen durch eine Druckdifferenz die in axialer Richtung über den Dichtspalt wirksam ist. Eine Aufweitung des Dichtspaltes erhöht den Verluststrom und verringert den volumetrischen Wirkungsgrad.

Bis zu einem gewissen Feststoffanteil hilft man sich durch Beschichten der Oberflächen im Dichtspalt mit einer verschleissfesten Schutzschicht, deren Lebensdauer durch die Art des Betriebes gegeben ist. Bei zu kurzen Reparaturintervallen bleibt daher nur der Einsatz von selbsttragenden Verschleissringen aus keramischen Werkstoffen. Diese weisen zwar eine sehr hohe Verschleissfestigkeit auf, sind aber konstruktiv schwierig zu handhaben, da sie eher spröde sind und wegen ihrer Verschleissfestigkeit nur in einfachen Formen herstellbar sind. Ein weiterer Nachteil besteht im Vergleich zu anderen Werkstoffen in ihrem zu geringen Wärmeausdehnungskoeffizienten in Verbindung mit ihrer geringen Elastizität, die bei einem auf seiner Innenseite aufgespannten Verschleissring für den Betreiber einer Strömungsmaschine, wie beispielsweise einer mehrstufigen Radialpumpe, ein Risiko darstellt. Temperaturschwankungen im Fördermedium aber auch bestimmte Betriebssituationen wie das Fördern gegen geschlossenen Schieber, was ebenfalls zu einer Temperaturerhöhung führen kann, können bei einem solchen Verschleissring zu unzulässigen Zugspannungen führen.

Bei einem an seiner äusseren Mantelfläche eingespannten Verschleissring dessen Verschleissfläche auf der Innenseite liegt, wirkt sich eine Erniedrigung der Temperatur in einer gleichmässig verteilten Erhöhung der Druckspannung aus, was in der Regel zulässig ist. Wenn eher bei höheren Temperaturen gearbeitet wird, kann man die aussen gehaltenen Verschleissringe in einer Schrumpfverbindung halten, die trotz der grösseren Wärmeausdehnung eines haltenden Metallteils immer noch zur Zentrierung und Kraftübertragung ausreicht. Anders ist die Situation bei Verschleissringen die auf ihrer äusseren Mantelfläche mit einer Verschleissfläche versehen sind.

Es ist Aufgabe der Erfindung Verschleissringe mit kleinem Wärmeausdehnungskoeffizienten, die auf ihrer Mantelfläche mit einer Verschleissfläche versehen sind, für Strömungsmaschinen in einem grossen Bereich einsetzbar zu machen. Diese Aufgabe wird mit dem Kennzeichen des unabhängigen Anspruchs 1 gelöst, indem der Verschleissring aus einem Material mit geringerer Wärmeausdehnung als Teile auf denen er abgestützt ist, besteht, indem er bis zu einer bestimmten für den Dichtspalt vorgesehenen Temperatur auf seiner inneren Mantelfläche hohl liegt und indem eine erste kegelförmige Haltefläche mit der Spitze ihres Kegels eine als Geradschulter ausgeführte zweite Haltefläche in deren Ebene auf der Rotationsachse trifft oder eine als kegelförmige Haltefläche ausgeführte zweite Haltefläche an deren Kegelspitze auf der Rotationsachse trifft.

Diese Anordnung hat den Vorteil, dass die kegelförmigen Halteflächen, welche sich bei Temperaturerhöhung stärker als der Verschleissring ausdehnen, sich relativ zum Verschleissring längs ihren Kegelmantellinien ausdehnen. Wenn die axiale Vorspannung auf den Kegelflächen nicht zu gross gewählt ist - der Verschleissring dehnt sich auch etwas - dann kann eine minime Gleitbewegung zwischen den Kegelflächen stattfinden, welche überhöhte Ringspannungen in Form von Zugspannungen im Verschleissring verhindert. Bei einer Geradschulter als Haltefläche ist diese minime Gleitbewegung ebenfalls möglich. Im reibungsfreien Zustand würde eine Geradschulter mit gegenüberliegender Kegelfläche auch bei sinkender Temperatur eine Zentrierung des Verschleissringes bewirken. Wegen der Reibung kann es daher vorteilhaft sein, auf der Seite der Geradschulter zusätzlich eine äussere Zentrierschulter anzubringen, deren Schrumpfspannung bei den tiefsten vorkommenden Temperaturen noch zulässig ist. Auf diese Weise kommt an der Geradschulter bei jedem Temperaturzyklus eine exakte Zentrierung zustande.

Bei Verschleissringen mit einem Wärmeausdehnungskoeffizienten $\alpha$ von weniger als $10 \times 10^{-6}$/Grad C zeigt diese Konstruktion Vorteile. Verschleissringe aus hochverschleissfestem Material wie Keramik, beispielsweise Metalloxide, Wolframkarbide oder Siliziumkarbide können auf diese Weise eingesetzt werden. Selbst Fluide mit grösseren Feststoffanteilen lassen sich fördern. Dabei kann der Durchmesser einzelner Feststoffteile die Grösse der Spaltweite des Dichtungsspaltes haben, weil wegen der Wahl der Verschleissringe für diese grossen Teile eine Art Mahlvorgang eintritt. Dieser Vorgang wirkt sich bei hohen Betriebstemperaturen über 100°C und/oder über 300°C günstig aus, da keramische Werkstoffe erst bei sehr viel höheren Temperaturen ihre Verschleisseigenschaften ändern.

Im folgenden wird die Erfindung anhand von Ausführungsbeispielen beschrieben. Es zeigen:

Fig. 1     Schematisch aus dem Stand der Technik einen Ausschnitt einer doppelflutigen Pumpe mit eingeschrumpften Verschleissringen an Laufrädern und Statorteilen;

Fig. 2    schematisch einen Ausschnitt aus Fig. 1, in welchem die Leckageströme durch die radialen Dichtspalten dargestellt sind;

Fig. 3    schematisch und vergrössert eine erste erfindungsgemässe Ausführung für einen Verschleissring an einem Laufrad;

Fig. 4    schematisch und vergrössert eine weitere erfindungsgemässe Ausführung an einer rotierenden Büchse;

Fig. 5    schematisch und vergrössert eine weitere erfindungsgemässe Ausführung mit zwei kegelförmigen Halteflächen;

Fig. 6    schematisch und vergrössert eine weitere erfindungsgemässe Ausführung an einer stationären Büchse; und

Fig. 7    schematisch eine weitere erfindungsgemässe Ausführung mit zwei kegelförmigen Halteflächen.

In den Figuren sind selbsttragende Verschleissringe 1a, 1b für Strömungsmaschinen mit einem Fluid gezeigt, die an einem radialen Dichtspalt 18 zu einem Rotor 9 angeordnet sind, und deren äussere Mantelfläche 3 mit einer Verschleissfläche 2 versehen ist. Die in axialer Richtung fixierten Verschleissringe 1a, 1b bestehen aus einem Material mit geringerem Wärmeausdehnungskoeffizienten als ihre Abstützung und liegen auf ihrer inneren Mantelfläche hohl, wobei eine erste kegelförmige Haltefläche 8 mit der Spitze ihres Kegels eine als Geradschulter ausgeführte zweite Haltefläche 8" in deren Ebene 19 auf der Rotationsachse trifft oder eine als kegelförmige Haltefläche 8' ausgeführte zweite Haltefläche an deren Kegelspitze auf der Rotationsachse 20 trifft.

In den nachfolgenden Figuren sind für gleiche Funktionsteile gleiche Hinweiszeichen verwendet.

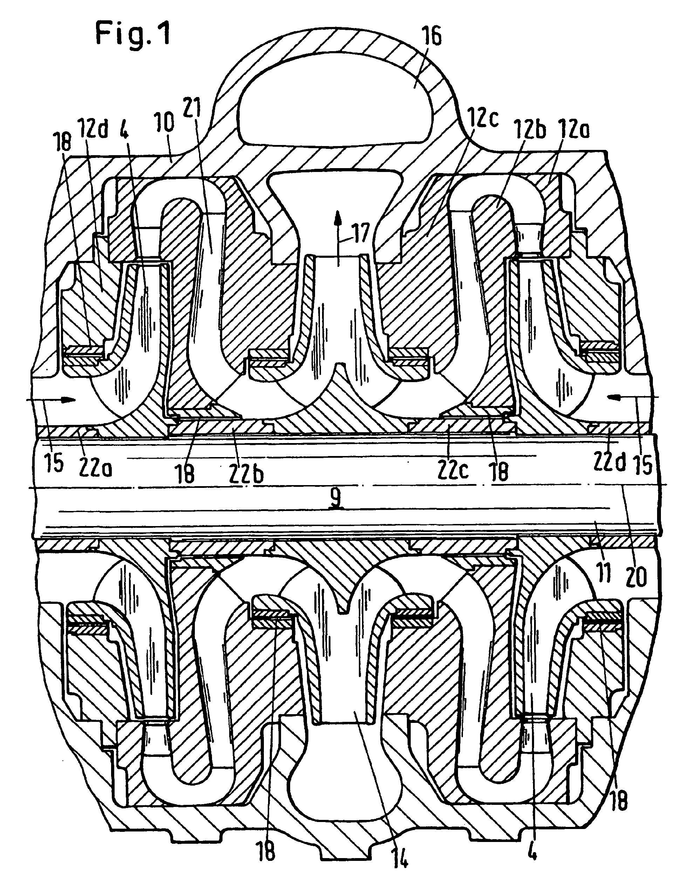

In Figur 1 ist eine bekannte Anordnung einer doppelflutigen zweistufigen Radialpumpe mit geschlossenen Laufrädem 4, 14, einem Gehäuse 10 und Statorteilen 12a, 12b, 12c, 12d gezeigt. Eine Eintrittsströmung 15 fliesst durch ein erstes Laufrad 4, erfährt eine Druckerhöhung und wird über einen Umlenkkanal 21 einem zweiten Laufrad 14 zugeführt, um nach einer weiteren Druckerhöhung aus Austrittsströmung 17 das Gehäuse 10 über eine Austrittspirale 16 zu verlassen. Der Rotor 9 mit Rotationsachse 20 ist aus einer Welle 11, Laufrädem 4, 14 und Wellenhülsen 22a, 22b, 22c, 22d zusammengesetzt. Lager und Gehäusedichtungen sind nicht gezeigt. An der Deckscheibe der Laufräder 4, 14 werden radiale Dichtspalte 18 mit eingeschrumpften Verschleissringen erzeugt. Bei den ersten Laufrädern 4 sind weitere Dichtspalte 18 hinter dem Laufrad an der Nabenseite angebracht.

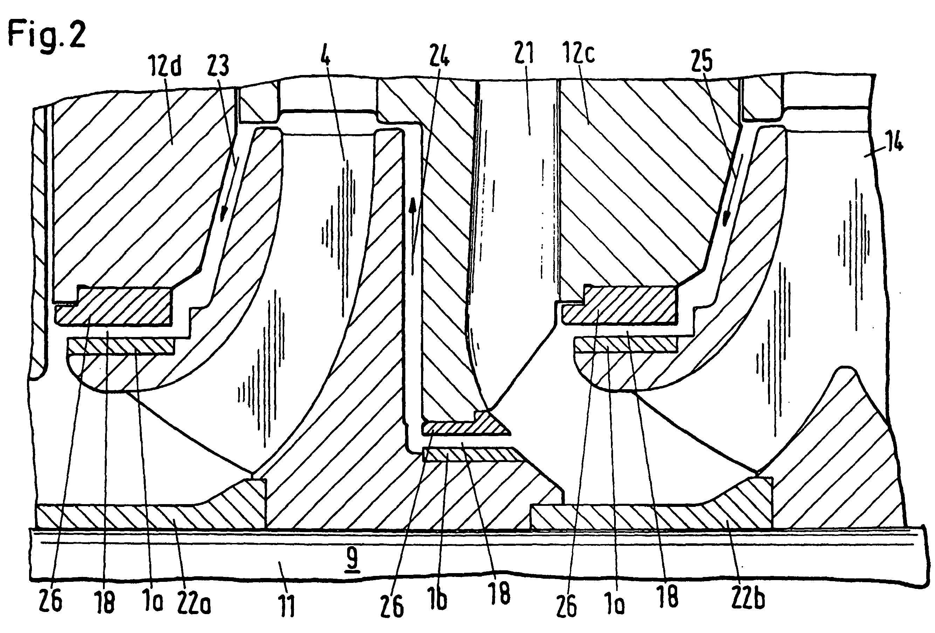

Der vergrösserte Ausschnitt in Figur 2 zeigt Leckageströme 25, 24, 23, die entsprechend dem Druckgefälle zwischen Rotor 9 und Statorteilen 12c, 12d zurückfliessen. Die Rückfliessmenge wird durch die Spaltweite der radialen Dichtspalte 18 bestimmt. Diese bestehen aus einem in einem Statorteil 12c, 12d eingeschrumpften Gegenring 26 und aus einem auf dem rotierenden Teil 4, 14 befestigten Verschleissring 1a, 1b, dessen äussere Mantelfläche als Verschleissfläche ausgebildet ist.

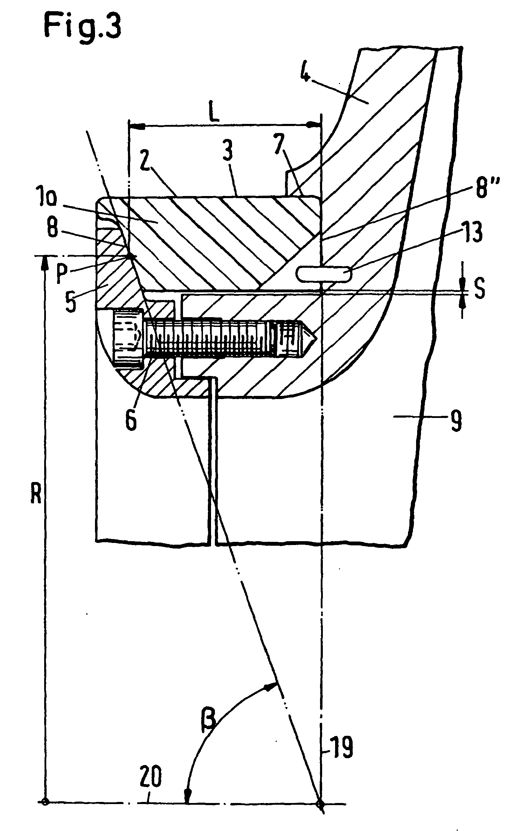

In Figur 3 ist der Verschleissring 1a auf seiner Aussenseite mit einer zylindrischen Mantelfläche 3 versehen, die gleichzeitig als Verschleissfläche 2 ausgebildet ist. Die innere zylindrische Mantelfläche liegt hohl und bildet einen Spalt S zum Laufrad 4. Der Verschleissring wird in axialer Richtung an einer Stirnfläche durch eine Haltefläche in Form einer Geradschulter 8", welche senkrecht zur Rotationsachse 20 steht, abgestützt. Auf der Gegenseite presst ein Haltering 5, der seinerseits am Laufrad 4 zentriert und mit Schrauben 6 gehalten ist, den Verschleissring 1a mit einer kegelförmigen Haltefläche 8 in axialer Richtung. Die Kegelfläche 8 gehört zu einem Kegel mit halbem Kegelwinkel $\beta$, wobei die Spitze des Kegels eine Ebene 19, in der die Geradschulter 8" liegt, auf der Rotationsachse 20 trifft. Eine Drehsicherung 13 in Form eines Stiftes, der in einer Nut des Verschleissrings 1a liegt, kann zusätzlich zu der Reibung der Halteflächen 8, 8" Drehmoment vom Laufrad 4 auf den Verschleissring übertragen.

Wenn man annimmt, dass in der gezeichneten Position, die tiefste Betriebstemperatur herrscht, dann sollte der Spalt S so bemessen sein, dass bei einer bestimmten Betriebstemperatur aufgrund der grösseren radialen Wärmeausdehnung des Laufrades der Spalt S verschwindet, ohne dass bei der höchsten Betriebstemperatur unzulässige Zugspannungen im Verschleissring 1a entstehen.

Wenn man die Ebene 19 der Geradschulter 8" als Ausgangsbasis nimmt, um die Bewegung eines für Haltefläche 8 und Verschleissring 1a gemeinsamen Punktes P mit zunehmender Erwärmung zu beschreiben, dann wächst der Haltering 5 in axialer Richtung proportional zu L x $\Delta$T x $\alpha_L$, wobei L der Abstand zur Ebene 19 ist, $\Delta$T die Temperaturdifferenz in Grad Celsius ist und $\alpha_L$ der Wärmeausdehnungskoeffzient des Laufrades 4 ist. Gleichzeitig wächst der Haltering gegenüber der Rotationsachse 20 in radialer Richtung proportional zu R x $\Delta$T x $\alpha_L$, wobei R der Radiusabstand von Punkt P ist. Die Steigung des Punktes P beträgt somit:

$$\frac{R \times \Delta T \times \alpha_L}{L \times \Delta T \times \alpha_L} = \frac{R}{L} = \text{tg}\,\beta = \text{constant}$$

Analog kann man für den Verschleissring 1a mit einem Wärmeausdehnungskoeffizienten $\alpha_V$ die Stei-

gung des ursprünglichen Punktes P bestimmen:

$$\frac{R \times \Delta T \times \alpha v}{L \times \Delta T \times \alpha v} = \frac{R}{L} = \text{tg } \beta = \text{constant}$$

Das heisst Haltefläche 8' und der von ihr gehaltene Verschleissring bewegen sich unterschiedlich schnell auf der gleichen Kegelfläche mit dem halben Kegelwinkel β. Wenn die Reibung zwischen Haltefläche 8 und Verschleissring 1a so bemessen ist, dass bei der schnelleren Ausdehnung von Haltering und Laufrad keine unzulässigen Zugspannungen im Verschleissring auftreten, dann besteht hiermit eine Fixierung, welche die temperaturabhängige Verschiebung zwischen Haltering 5 resp. Laufrad 4 und dem Verschleissring zulässt. Es genügt somit die Halteschrauben 6 beispielsweise als Dehnschrauben so auszulegen und festzuziehen, dass keine zu grossen Reibungskräfte auftreten können. Eine weitere Hilfe für die Montage des Verschleissringes 1a besteht in einer zusätzlichen Zentrierschulter 7, welche bei tiefen Temperaturen an der äusseren Mantelfläche 3 des Verschleissringes anliegt und sich bei steigenden Temperaturen davon entfernt. Solange der Winkel β nicht zu nahe bei 90° gewählt wird, findet eine dauernde Zentrierung des Verschleissringes 1a auf der Haltefläche 8 des Halterings 5 statt.

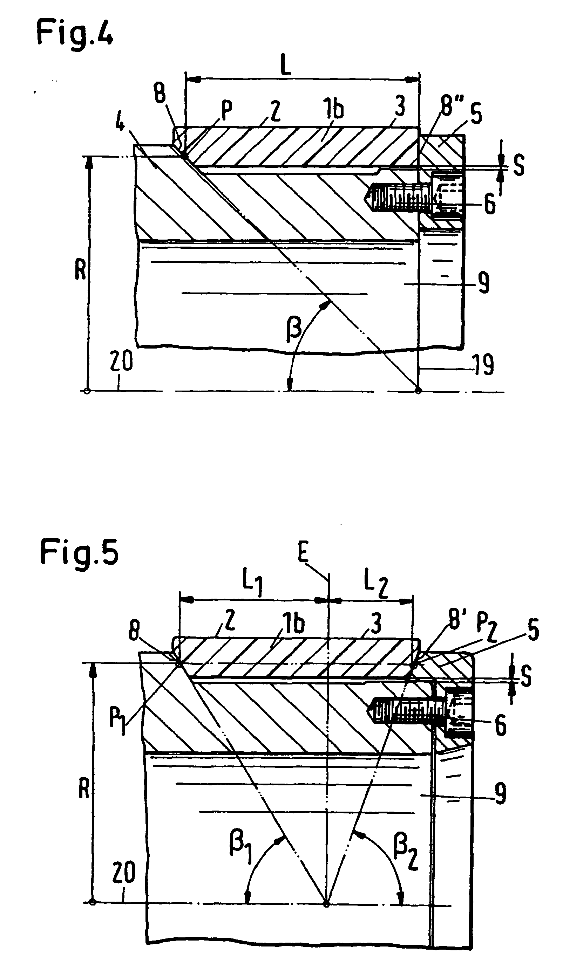

In Figur 4 ist die Länge L eines Verschleissringes 1b im Verhältnis zum Radiusabstand R grösser als in Figur 3 gewählt. Der halbe Kegelwinkel β wird damit kleiner und es findet eine bessere Zentrierung durch die Haltefläche 8 statt. Gleichzeitig mit der besseren Zentrierung entsteht auch eine grössere Zugspannung im Verschleissring 1b. Die Anpresskraft an einer gegenüberliegenden Haltefläche 8" eines Halterings 5 muss daher auf die Spreizwirkung des Kegels angepasst sein.

In Figur 5 ist die Länge des Verschleissringes 1b aus zwei Teillängen $L_1$ und $L_2$ zusammengesetzt. Dadurch, dass die Summe $L_1 + L_2$ in etwa dem Radiusabstand R entspricht, entstehen gut zentrierende halbe Kegelwinkel $\beta_1$ und $\beta_2$. In Bezug auf eine theoretische Trennebene E, die senkrecht zur Rotationsachse 20 steht und durch den Schnittpunkt der beiden Kegelspitzen geht, bewegen sich zwei gegenüberliegende Punkte $P_1$ und $P_2$ in den Halteflächen 8 und 8' mit steigender Temperatur bei gleichem Radius R auf der jeweiligen Kegelfläche.

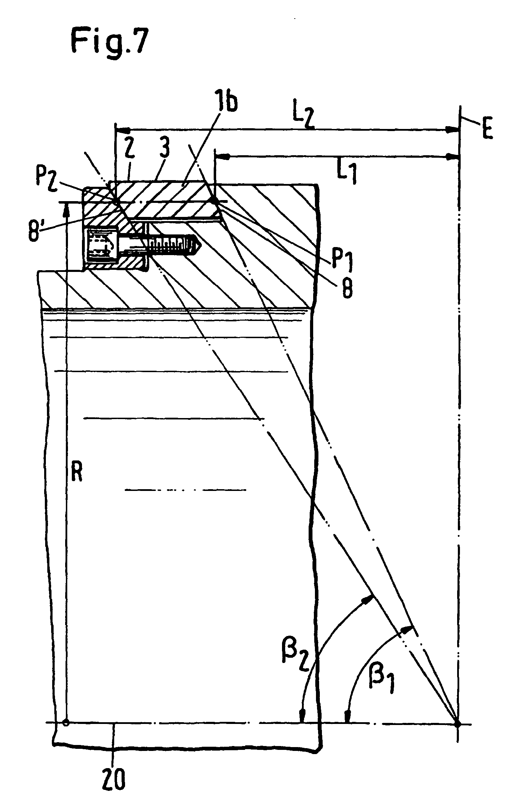

Es gibt konstruktive Einschränkungen, bei denen die Länge des Verschleissringes wesentlich kleiner als der Radiusabstand R der Halteflächen 8, 8' gewählt werden muss. Trotzdem ist es möglich eine gute Zentrierung, d.h. ähnlich grosse halbe Kegelwinkel $\beta_2$, $\beta_1$ für den Verschleissring 1b zu erreichen, wenn man den Berühungspunkt der beiden Kegelspitzen gegenüber dem Verschleissring auf der Rotationsachse 20 in einer Richtung verschiebt, wie in Figur 7 gezeigt ist. Die theoretische Trennebene E liegt dort ausserhalb des Verschleissringes. Die effektive Länge des Verschleissrings 1b ergibt sich aus der Differenz $L_2$-$L_1$. Der Verschleissring 1b erfährt durch die Haltefläche 8 mit dem grösseren halben Kegelwinkel $\beta_1$ als Ringspannung eine Druckspannung und durch die Haltefläche 8' mit dem halben Kegelwinkel $\beta_2$ als Ringspannung eine Zugspannung. Die Punkte $P_1$ und $P_2$ der Halteflächen bewegen sich längs der Kegelflächen bei Temperaturveränderungen.

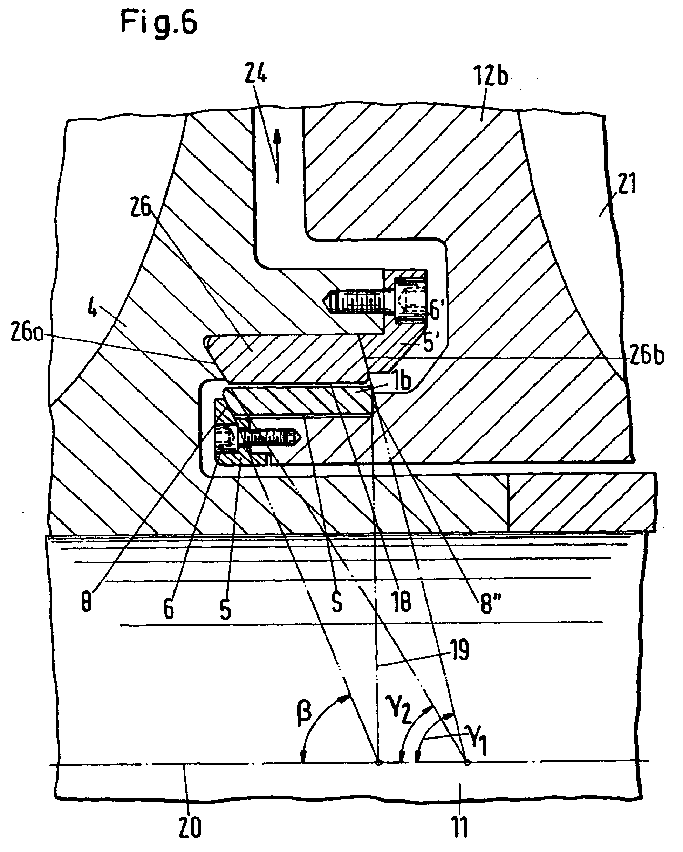

In Figur 6 ist ein Verschleissring 1b analog zu Figur 4 zentriert und befestigt, wobei der Haltering 5 und ein Statorteil 12b, an welchem eine Büchse angeformt ist, nicht rotierende Halteflächen 8 und 8" bilden. Ein rotierender Gegenring 26 ist am Laufrad 4 mit Halteschrauben 6' gehalten. Dieser Gegenring 26 kann ebenso aus Keramik bestehen und kegelförmige Halteflächen aufweisen, deren Kegelspitzen sich auf der Rotationsachse 20 berühren. Bei Temperaturerhöhungen laufen Laufrad 4 und Haltering 5' gegenüber dem Gegenring 26 schneller auf den Kegelflächen mit halbem Kegelwinkel $\gamma_1$, $\gamma_2$ nach aussen weg und es entsteht ein Spalt an der äusseren Mantelfläche des Gegenrings. Trotzdem ist eine vernünftige Zentrierung des Gegenrings über die halben Kegelwinkel $\gamma_1$, $\gamma_2$ möglich. Bei sehr grossen Temperaturunterschieden oder sehr viel grösseren Wärmeausdehnungskoeffizienten von Laufrad 4 und Haltering 5' gegenüber dem Gegenring 26 ist dies ebenfalls eine denkbare Lösung, wenn der Gegenring 26 nicht über den ganzen Temperaturbereich eingeschrumpft bleiben kann.

**Patentansprüche**

1. Strömungsmaschine für ein Fluid mit einem radialen Dichtspalt (18) zwischen Statorteilen (12a, b, c, d) und einem Rotor (9), wobei am Dichtspalt ein selbsttragender Verschleissring (1a, 1b) vorgesehen ist, dessen äussere Mantelfläche (3) mit einer Verschleissfläche (2) versehen ist und der in der Richtung der Rotationsachse (20) des Rotors (9) axial fixiert ist, **dadurch gekennzeichnet, dass** der Verschleissring (1) aus einem Material mit geringerer Wärmeausdehnung als Teile (4, 14, 5), auf denen er abgestützt ist, besteht, dass er bis zu einer bestimmten für den Dichtspalt (18) vorkommenden Temperatur auf seiner inneren Mantelfläche hohl liegt und dass eine erste kegelförmige Haltefläche (8) mit der Spitze ihres Kegels eine als Geradschulter ausgeführte zweite Haltefläche (8") in deren Ebene (19) auf der Rotationsachse trifft oder eine als kegelförmige Haltefläche ausgeführte zweite Haltefläche (8') an deren Kegelspitze auf der Rotationsachse (20) trifft.

2. Strömungsmaschine nach Anspruch 1, **dadurch gekennzeichnet, dass** der Verschleissring (1) bei der tiefsten für den Dichtspalt (18) vorkommenden Temperatur an seiner Mantelfläche (3) zusätzlich einseitig mit einer Zentrierschulter (7) aussenzentriert ist.

**3.** Strömungsmaschine nach Anspruch 1 oder 2, **dadurch gekennzeichnet, dass** das Material des Verschleissringes einen Wärmeausdehnungskoeffizienten a von weniger als 10 x 10⁻⁶/Grad C aufweist.

**4.** Strömungsmaschine nach Anspruch 3, **dadurch gekennzeichnet, dass** das Material des Verschleissringes aus Keramik wie beispielsweise Metalloxiden, Wolframkarbid oder Siliziumkarbid besteht.

**5.** Verwendung einer Strömungsmaschine nach einem der Ansprüche 1 bis 4 für ein Fluid, das mit Feststoffen beladen ist.

**6.** Verwendung einer Strömungsmaschine nach Anspruch 5 für ein Fluid, bei welchem Feststoffteile einen Durchmesser in der Grösse des radialen Dichtspalts (18) aufweisen.

**7.** Verwendung einer Strömungsmaschine nach Anspruch 5 für Temperaturen grösser als 100 Grad Celsius.

**8.** Verwendung einer Strömungsmaschine nach Anspruch 5 für Temperaturen grösser als 300 Grad Celsius.

**9.** Strömungsmaschine für ein Fluid mit einem radialen Dichtspalt (18) zwischen Statorteilen (12a, b, c, d) und einem Rotor (9), wobei am Dichtspalt ein selbsttragender Gegenring (26) vorgesehen ist, dessen innere Mantelfläche mit einer Verschleissfläche (2) versehen ist und der in der Richtung der Rotationsachse (20) des Rotors (9) axial fixiert ist, **dadurch gekennzeichnet, dass** der Gegenring (26) aus einem Material mit geringerer Wärmeausdehnung als Teile (4) auf denen er abgestützt ist besteht, dass er bis zu den tieferen für den Dichtspalt (18) vorkommenden Temperaturen auf seiner äusseren Mantelfläche hohl liegt und dass eine erste kegelförmige Haltefläche (26a) mit ihrer Kegelspitze eine zweite kegelförmige Haltefläche (26b) an deren Kegelspitze auf der Rotationsachse (20) trifft.

**Claims**

**1.** Flow machine for a fluid, comprising a radial sealing gap (18) between stator parts (12a, b, c, d) and a rotor (9), with a self supporting wear ring (1a, 1b), of which the outer jacket surface (3) is provided with a wear surface (2) and which is axially fixed in the direction of the axis of rotation (20) of the rotor (9), being provided at the sealing gap, **characterized in that** the wear ring (1) consists of a material with a lower thermal expansion than parts (4, 14, 15) on which it is supported; **in that** it lies hollowly on its inner jacket surface up to a specific temperature which occurs for the sealing gap (18); and **in that** a first conical holder surface (8) encounters with the apex of its cone a second holder surface (8"), which is designed as straight shoulder, in the plane (19) of the latter on the axis of rotation or encounters a second holder surface (8'), which is designed as a conical holder surface, at its cone apex on the axis of rotation (20).

**2.** Flow machine in accordance with claim 1, **characterized in that** the wear ring (1) is additionally outwardly centered at its jacket surface (3) at one side with a centering shoulder (7) at the lowest temperature occurring for the sealing gap (18).

**3.** Flow machine in accordance with claim 1 or claim 2, **characterized in that** the material of the wear ring has a coefficient of thermal expansion $\alpha$ of less than $10 \times 10^{-6}$ degrees C.

**4.** Flow machine in accordance with claim 3, **characterized in that** the material of the wear ring consists of a ceramic such as for example metal oxides, tungsten carbide or silicon carbide.

**5.** Use of a flow machine in accordance with any one of the claims 1 to 4 for a fluid which is provided with solids.

**6.** Use of a flow machine in accordance with claim 5 for a fluid in which solid parts have a diameter of the order of magnitude of the radial sealing gap (18).

**7.** Use of a flow machine in accordance with claim 5 for temperatures greater than 100 degrees C.

**8.** Use of a flow machine in accordance with claim 5 for temperatures greater than 300 degrees C.

**9.** Flow machine for a fluid, comprising a radial sealing gap (18) between stator parts (12a, b, c, d) and a rotor (9), with a self-supporting counter ring (26), of which the inner jacket surface is provided with a wear surface (2') and which is axially fixed in the direction of the axis of rotation (20) of the rotor (9), being provided at the sealing gap, **characterized in that** the counter ring (26) consists of a material with a lower thermal expansion than parts (4) on which it is supported; **in that** it lies hollowly on its outer jacket surface up to the lower temperatures which occur for the sealing gap (18); and **in that** a first conical holder surface (26a) encounters with its cone apex a second conical holder surface (26b) at its cone apex on the axis of rotation (20).

## Revendications

1. Machine rotative pour un fluide avec un jeu d'étanchéité (18) radial entre des parties de stator (12a, b, c, d) et un rotor (9), une bague d'usure (1a, 1b) autoportante étant prévue sur le jeu d'étanchéité, bague dont la surface d'enveloppe (3) extérieure est dotée d'une surface d'usure (2) et qui est fixée axialement dans la direction de l'axe de rotation (20) du rotor, **caractérisé en ce que** la bague d'usure (1) est à base d'un matériau présentant une dilatation thermique plus faible que des parties (4, 14, 5) sur lesquelles elle est soutenue, **en ce qu'**elle est disposée en creux sur sa surface d'enveloppe intérieure jusqu'à une certaine température survenant pour le jeu d'étanchéité (18) et **en ce qu'**une première surface de retenue (8) de forme conique touche avec l'extrémité de son cône une seconde surface de retenue (8") réalisée sous la forme d'un épaulement droit dans son plan (19) sur l'axe de rotation où touche une seconde surface de retenue (8') réalisée sous la forme d'une surface de retenue de forme conique sur sa pointe de cône sur l'axe de rotation (20).

2. Machine rotative selon la revendication 1, **caractérisé en ce que** la bague d'usure (1) est centrée à l'extérieur à la température minimale survenant pour le jeu d'étanchéité (18) sur sa surface d'enveloppe (3) en supplément d'un côté avec un épaulement de centrage (7).

3. Machine rotative selon la revendication 1 ou 2, **caractérisé en ce que** le matériau de la bague d'usure présente un coefficient de dilatation thermique $\alpha$ inférieur à $10 \times 10^{-6}/°C$.

4. Machine rotative selon la revendication 3, **caractérisé en ce que** le matériau de bague d'usure est en céramique comme par exemple des oxydes de métal, du carbure de tungstène ou du carbure de silicium.

5. Utilisation d'une machine relative selon l'un quelconque des revendications 1 à 4 pour un fluide, qui est chargé avec des matières solides.

6. Utilisation d'une machine rotative selon la revendication 5 pour un fluide, sur lequel des parties solides présentent un diamètre de la grandeur du jeu d'étanchéité (18) radial.

7. Utilisation d'une machine rotative selon la revendication 5 pour des températures supérieures à 100°C.

8. Utilisation d'une machine rotative selon la revendication 5 pour des températures supérieures à 300°C.

9. Machine rotative pour un fluide avec un jeu d'étanchéité (18) radial entre des parties de stator (12a, b, c, d) et un rotor (9), une contre-bague (26) autoportante étant prévue sur le jeu d'étanchéité, bague dont la surface d'enveloppe intérieure est dotée d'une surface d'usure (2') et qui est fixée axialement dans la direction de l'axe de rotation (20) du rotor (9), **caractérisée en ce que** la contre-bague (26) est à base d'un matériau avec une dilatation thermique plus faible que les parties (4) sur lesquelles elle est soutenue, **en ce qu'**elle est disposée en creux sur sa surface d'enveloppe extérieure jusqu'aux températures plus basses apparaissant pour le jeu d'étanchéité (18) et **en ce qu'**une première surface de retenue (26a) de forme conique touche avec sa pointe de cône une seconde surface de retenue (26b) de forme conique sur sa pointe de cône sur l'axe de rotation (20).

Fig.1

Fig.2

EP 1 116 886 B1

# Fig.3

**Fig.4**

**Fig.5**

# Fig.6

Fig.7